# EUROPÄISCHE PATENTSCHRIFT

(11) **EP 1 494 846 B1**
(45) Veröffentlichungstag und Bekanntmachung des Hinweises auf die Patenterteilung: **08.11.2006**
(21) Anmeldenummer: 02798331.1
(22) Anmeldetag: 12.12.2002
(51) Int. Cl.: B29C 47/60

(54) **VERFAHREN ZUR HERSTELLUNG EINER PLASTIFIZIER-, MISCH- ODER FÖRDERSCHNECKE MIT VERSCHLEISSGESCHÜTZTEN SCHNECKENSTEGEN SOWIE VERFAHREN ZUR DEREN REPARATUR**
METHOD FOR PRODUCING A PLASTIFYING, MIXING OR CONVEYING SCREW WITH WEAR-PROTECTED SCREW FLIGHTS AS WELL AS METHOD FOR REPAIRING THE SAME
PROCEDE DE PRODUCTION D'UNE VIS DE PLASTIFICATION, D'UNE VIS MELANGEUSE OU D'UNE VIS SANS FIN A NERVURES PROTEGEES CONTRE L'USURE ET PROCEDE POUR SA REPARATION

(30) Priorität: 14.12.2001 DE 10161364
(43) Veröffentlichungstag der Anmeldung: 12.01.2005
(73) Patentinhaber: Mannesmann Plastics Machinery GmbH, 80997 München (DE); Demag Ergotech GmbH, 90571 Schwaig (DE)
(72) Erfinder: KORTMANN, Paul-Eberhard, 82223 Eichenau (DE); PÖLTL, Bernhard, 80799 München (DE); ZIMMERMANN, Thomas, 91227 Leinburg (DE); WESLING, Volker, 38678 Clausthal (DE); RASS, Ino, Jakob, 52062 Aachen (DE); DEISSER, Todd, Alexander, 52066 Aachen (DE)
(74) Vertreter: Wilhelm, Ludwig
(86) Internationale Anmeldenummer: PCT/EP2002/014154
(87) Internationale Veröffentlichungsnummer: WO 2003/051609

(56) Entgegenhaltungen:
- WO-A-01/36177
- DE-A- 19 934 343
- DE-C- 3 943 344
- PATENT ABSTRACTS OF JAPAN vol. 011, no. 003 (C-395), 7. Januar 1987 (1987-01-07) & JP 61 183430 A (KUBOTA LTD), 16. August 1986 (1986-08-16)

## Beschreibung

Die Erfindung betrifft ein Verfahren zur Herstellung einer Plastifizier-, Misch- oder Förderschnecken mit verschleißgeschützten Schneckenstegen, insbesondere einer Schnecke für Kunststoff verarbeitende Maschinen.

Aus der EP 0 801 690 B1 ist ein Verfahren zur Herstellung einer Beschichtung auf der Oberfläche von Plastifizierschnecken für Spritzgießmaschinen bekannt, bei welchem ein metallischer, hartmetallischer oder keramischer Werkstoff mittels eines Spritzstrahles im Hochgeschwindigkeitsflammspritz-Verfahren aufgetragen wird. Nachteilig an dem Hochgeschwindigkeitsflammspritz-Verfahren ist, dass der Prozeß teuer und langwierig ist, und dass sich nur eine vergleichsweise einfache Geometrie beschichten läßt.

Aus der gattungsbildenden DE 39 43 344 C1 ist es bekannt, eine Plastifizierschnecke mit einer Verschleißschutzschicht zu versehen, indem ein aus einem verschleißbeständigen metallischen Werkstoff bestehendes Wickelband auf die Stegoberseiten der fertigen Schneckenstege gewickelt und dort befestigt wird. Beim Verschweissen oder Löten kommt es zu einer nicht unerheblichen thermischen Belastung, die sich auf die Bereiche der Stege konzentriert, was zu einem Verziehen der Schnecke in diesen Bereichen führen kann und eine entsprechende Nachbehandlung erforderlich macht.

Ausgehend hiervon liegt der Erfindung liegt die Aufgabe zugrunde, ein gattungsgemäßes Verfahren zu schaffen, das bei vergleichsweise geringen Kosten und zügigem Fertigungsablauf eine niedrigere thermische Belastung der Schneckenstege aufweist.

Diese Aufgabe wird gelöst durch ein Verfahren mit den Merkmalen des Anspruchs 1. Bei diesem Verfahren zur Herstellung einer Verschleißschutzbeschichtung auf der Oberfläche von Plastifizier-, Misch- oder Förderschnecken von Kunststoffmaschinen wird gerade auf dem Bereich der Oberfläche des Schneckengrundkörpers, der nach vollständiger Bearbeitung der Plastifizier-, Misch- oder Förderschnecke die Oberseite von Stegen ausbildet, ein einen Beschichtungswerkstoff enthaltendes Band aufgebracht. Dieses Band wird anschließend thermisch behandelt, so dass in dem besagten Bereich eine verschleißgeschützte Oberfläche entsteht. Anschließend wird der Schneckengrundkörper bearbeitet, so dass die Stege herausgearbeitet werden und der dazwischenliegende Schneckengrund gebildet wird. Dies kann beispielsweise durch eine spanabhebende Bearbeitung erfolgen. Das Band kann in fast jedem beliebigen Bearbeitungsstadium der Plastifizier-, Misch- oder Förderschnecke aufgebracht und thermisch behandelt werden, also insbesondere beim Rohling des Schneckengrundkörpers der Plastifizier-, Misch- oder Förderschnecke. Ein weiterer Vorteil ist darin begründet, dass das Band auch zu Reparaturzwecken einer bereits im Einsatz befindlichen Schnecke zum Einsatz kommen kann.

In einer vorteilhaften Ausgestaltung der Erfindung wird das Band in eine spiralförmige Nut des Schneckengrundkörpers eingelegt und anschließend thermisch behandelt. In weiteren spanabhebenden Arbeitsgängen wird der Schneckengrundkörper derart bearbeitet, dass der durch das Band verschleißgeschützte Bereich des Schneckengrundkörpers als Steg zurückbleibt. Dabei kann die spanabhebende Bearbeitung soweit gehen, dass der Steg im wesentlichen aus dem Schneckengrundkörpermaterial gebildet wird und sich nur auf seiner Oberfläche das Band befindet. Es ist aber auch möglich, ein genügend dickes Band zu verwenden und den Steg im wesentlichen nur mit dem Band zu bilden. In diesem Fall kann sich die spanabhebende Bearbeitung auf den Übergang zwischen Band und Schneckengrund beschränken, indem dort lediglich eine Hohlkehle ausgebildet wird. Diese Vorgehensweise mit der Nut bietet den Vorteil, dass das Band in der Nut gut fixiert ist und nicht seitlich verrutscht.

Vorzugsweise wird das Band auf den Schneckengrundkörper aufgeklebt. Dies ist die einfachste und kostengünstigste Möglichkeit der Befestigung.

In einer vorteilhaften Variante hierzu wird das Band auf dem Schneckengrundkörper durch einen Stützzylinder aus zwei oder mehr Halbschalen oder einen flexiblen Stützstrumpf, insbesondere ein Drahtgeflecht fixiert. Gegenüber der Aufklebung des Bandes entfällt in dieser Variante der Kleber. Probleme mit Verbrennungsrückständen des Klebers bei der Wärmebehandlung des Bandes treten dadurch nicht auf.

Die thermische Behandlung ist vorzugsweise ein Lötprozess. Das Band wird dabei stoffschlüssig mit dem Schneckengrundkörper verbunden ohne dass dieser durch zu hohe thermische Belastung verzogen wird. Diese thermische Behandlung findet vorzugsweise in einem Vakuumofen statt. Oxidationsprozesse an Luftsauerstoff werden hierdurch vermieden.

In einer hierzu alternativen Ausgestaltung der Erfindung erfolgt die thermische Behandlung mittels einer Induktionsspule. Dies ist eine schnelle und platzsparende Alternative zum Vakuumofen. Um Oxidationsprozesse an Luftsauerstoff zu vermeiden, erfolgt die thermische Behandlung mittels der Induktionsspule vorzugsweise unter Schutzgasumspülung.

In einer weiteren Alternativen hierzu erfolgt die thermische Behandlung mittels einer Flamme. Dies ist eine sehr kostengünstige Varante.

In einer weiteren Ausgestaltung der Erfindung wird das Band auch auf mindestens eine Flanke der Stege der Plastifizier-, Misch- oder Förderschnecken aufgebracht. Dadurch werden auch die Flankenbereiche der Stege verschleißgeschützt und eine Korrosion oder Erodierung der Stege von der Seite der Flanke her unterbunden.

Es können unterschiedliche Bandmaterialien an unterschiedlichen axialen Abschnitten der Plastifizier-, Misch- oder Förderschnecke je nach an den entsprechenden axialen Abschnitten vorherrschenden Verschleißarten wie Adhäsion, Korrosion und Abrasion verwendet werden. Dieser Vorteil kann auch dadurch erzielt werden, dass das Band in seiner chemischen Zusammensetzung über die axiale Länge der Plastifizier-, Misch- oder Förderschnecke variiert und damit den verschiedenen Verschleißarten Rechnung trägt.

In einer Weiterbildung der Erfindung wird zu Reparaturzwecken auf einem verschlissenen Bereich einer Plastifizier-, Misch- oder Förderschnecke nach dessen mechanischer Vorbehandlung ein einen Beschichtungswerkstoff enthaltendes Band aufgebracht. Das Band wird anschließend thermisch behandelt, so dass in dem besagten Bereich eine verschleißgeschützte Oberfläche entsteht. Vorzugsweise wird die Oberfläche im Bereich der Stege spanend nachbearbeitet. Dadurch kann auf einfache Weise konstengünstig eine nicht mehr gebrauchsfertige Schnecke wieder zum Einsatz gebracht werden.

Nachfolgend soll die Erfindung anhand von Ausführungsbeispielen und unter Bezugnahmen auf die Figuren 1 bis 6 näher beschrieben werden.
Es zeigen:
- Fig. 1: einen Schneckengrundkörper einer Plastifizier-, Misch- oder Förderschnecke, der spiralförmig von einem einen Beschichtungswerkstoff enthaltenden Band umwickelt wird, in einer Draufsicht,
- Fig.1a: Ausschnitt eines Längsschnitts in vergrößerter Darstellung vor der Herausarbeitung der Schneckenstege,
- Fig.1b: Ausschnitt eines Längsschnitts in vergrößerter Darstellung nach der Herausarbeitung der Schneckenstege,
- Fig. 2: einen Schneckengrundkörper einer Plastifizier-, Misch- oder Förderschnecke, bei dem ein einen Beschichtungswerkstoff enthaltendes Band in eine spiralförmige Nut eingelegt ist und in einer Induktionsspule getempert wird, in einer Draufsicht,
- Fig.2a: Ausschnitt eines Längsschnitts in vergrößerter Darstellung vor der Herausarbeitung der Schneckenstege,
- Fig.2b: Ausschnitt eines Längsschnitts in vergrößerter Darstellung nach der Herausarbeitung der Schneckenstege,
- Fig. 3: einen Schneckengrundkörper einer Plastifizier-, Misch- oder Förderschnecke, bei dem ein einen Beschichtungswerkstoff enthaltendes dickes Band in eine spiralförmige Nut eingelegt ist, in einer Draufsicht,
- Fig.3a: Ausschnitt eines Längsschnitts in vergrößerter Darstellung vor der Herausarbeitung der aus Bandmaterial bestehenden Schneckenstege,
- Fig.3b: Ausschnitt eines Längsschnitts in vergrößerter Darstellung nach der Herausarbeitung der aus Bandmaterial bestehenden Schneckenstege,
- Fig. 4: eine Plastifizier-, Misch- oder Förderschnecke mit einer verschleißgeschützten Oberflächenschicht auf der Umfangsfläche der herausgearbeiteten Stege in einer Draufsicht,
- Fig.4a: Ausschnitt eines Längsschnitts durch die Schnecke von Fig.4 in vergrößerter Darstellung.
- Fig. 5: Querschnitt durch einen Schneckengrundkörper mit aufgewickeltem Band und Fixierung des Bandes durch einen Stützstrumpf,
- Fig. 6: Querschnitt durch einen Schneckengrundkörper mit aufgewickeltem Band und Fixierung des Bandes durch einen Stützzylinder.

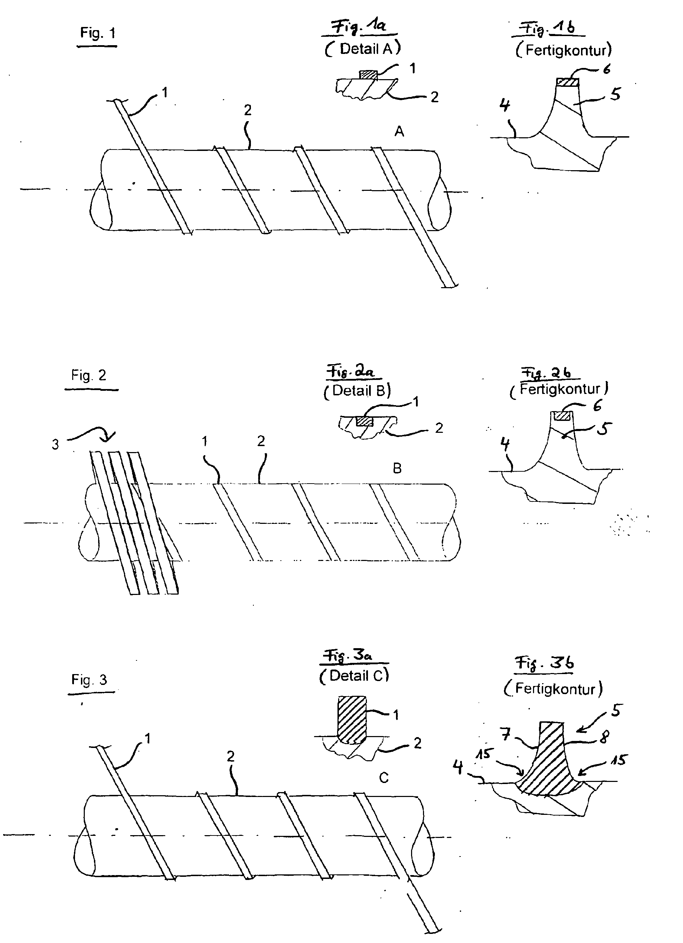

Gemäß Figur 1 wird ein einen Beschichtungswerkstoff enthaltendes Band 1 wird spiralförmig um einen Schneckengrundkörper 2 einer Plastifizier-, Misch- oder Förderschnecke gewickelt. Das Band 1 ist auf seiner Innenseite mit einem Kleber versehen und haftet daher selbständig auf dem Schneckengrundkörper 2. In der Detailansicht A (Fig.1a) ist das auf dem Schneckengrundkörper 2 aufliegende Band 1 in einem Schnitt durch den Schneckengrundkörper 2 entlang seiner Längsachse gezeigt. Der Schneckengrundkörper 2 mit dem Band 1 wird anschließend getempert. Dabei schmilzt das Band 1 kurz an und bildet mit dem Schneckengrundkörper 2 eine Lötverbindung aus. Anschließend erfolgt im Bereich zwischen den späteren Stegen eine spanabhebende Bearbeitung des Schneckengrundkörpers 2, so dass die Stege 5 herausgearbeitet werden und dazwischen der Schneckengrund 4 gebildet wird, so dass am Ende der Bearbeitung eine fertige Schnecke mit einem Steg 5 mit einer Verschleißschutzschicht 6 vorliegt, wie dies im Detail aus Fig.1c ersichtlich ist.

In einer in Fig. 2 dargestellten Weiterbildung der Erfindung wird das Band 1 in eine spiralförmige Nut eingelegt, so dass die Oberseite des Bandes 1 bündig mit der Oberfläche des Schneckengrundkörpers 2 abschließt. In der Detailansicht B (Fig.2a) ist in einem Schnitt durch den Schneckengrundkörper 2 entlang seiner Längsachse der bündige Abschluß des Bandes 1 an seiner Oberseite mit der Oberfläche des Schneckengrundkörpers 2 gut zu erkennen. Zum Auflöten des Bandes 1 wird der Schneckengrundkörper 2 axial durch eine Induktionsspule 3 geschoben. Dabei verbrennt der Kleber auf der Innenseite des Bandes 1 und das Band 1 schmilzt kurz an und geht mit dem Schneckengrundkörper 2 eine Verbindung in Form einer Lötung ein. Anschließend wird an den von dem Band 1 freigelassenen Stellen des Schneckengrundkörpers 2 Material abgetragen, so dass sich der Grund 4 einer Schnecke herausbildet und die stehengelassenen Bereiche, auf denen das Band 1 aufgelötet ist, als Stege 5 einer Schnecke übrig bleiben. Die Oberfläche der Stege 5 sind jetzt durch eine Verschleißschutzbeschichtung 6 gepanzert (Fig. 2b)

In der in Fig.3 gezeigten Ausgestaltung wird ein vergleichsweise dickes Band 1 in entsprechender Weise wie bei Figur 2 in eine spiralförmige Nut eingelegt. Ein beträchtlicher Teil des Bandes 1 ragt über die Oberfläche des Schneckengrundkörpers 2 hinaus (Fig.3a). Nachdem das Band 1 mit dem Untergrund verbunden worden ist, wir dieser überstehende Teil nachbearbeitet und ein Steg 5 aus dem Bandmaterial gebildet (Fig.3b). Beim Übergang vom Band 1 zu dem Schneckengrund 4 wird vorzugsweise eine Hohlkehle 15 herausgearbeitet.

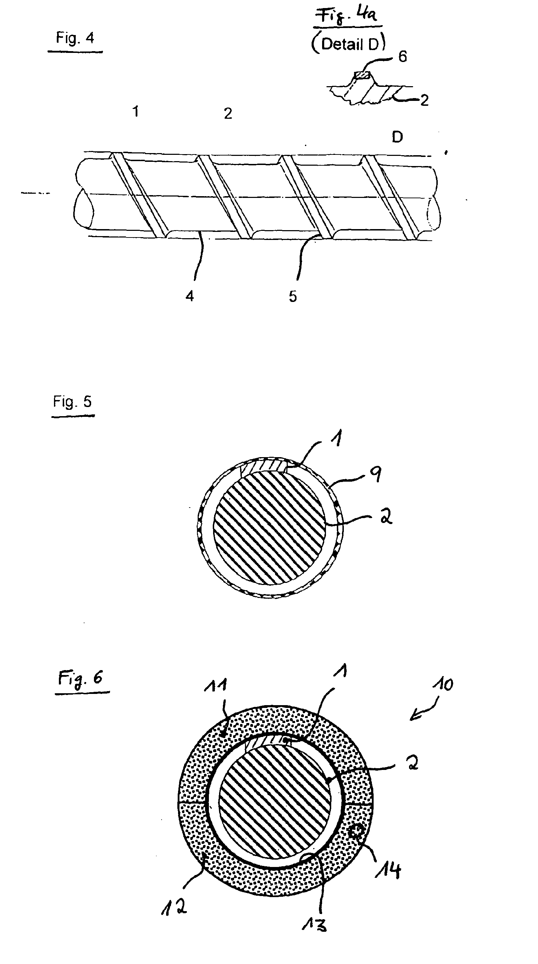

Aus den Figuren 4 und 4a ist ersichtlich, wie die fertige Schnecke mit den Schneckenstegen 5, dem Schneckengrund 4 und dem in den Stegen 5 befindlichen Band als Verschleißschutz 6 aussieht.

Wenn man auf das Verkleben des Bandes 1 mit dem Schneckengrundkörper verzichten möchte, kann gemäß Figur 5 vorgegangen werden. Zunächst wird das Band 1 auf den Schneckengrundkörper 2 aufgewickelt und anschließend ein dehnbarer Stützstrumpf 9 übergezogen. Auf diese Weise wird das Band 1 mechanisch auf dem Schneckengrundkörper 2 fixiert. Gegebenenfalls kann durch das Geflecht des Stützstrumpfes 9 hindurch eine Nachjustierung der Lage des Bandes 1 vorgenommen werden. Als Stützstrumpf kann beispielsweise ein antihaft beschichtetes Drahtgeflecht verwendet werden.

Anstelle des Stützstrumpfes 9 kann auch ein Stützzylinder 10 verwendet werden, der gemäß Figur 6 von einer oberen Halbschale 11 und einer unteren Halbschale 12 gebildet wird, die auf ihrer Innenseite eine Antihaftfolie 13 aufweisen. Die Halbschalen können in ihrem Innern eine Schüttung 14 besitzen, um der Innenseite des Stützzylinders eine gewisse Flexibilität zu geben, was sich vorteilhaft auf die Lagefixierung des Bandes 1 auswirkt.

Bedarfsweise können über die axiale Länge verschiedene Bänder verwendet werden. Dabei läßt sich an einer beliebigen Stelle ein weiteres Band 1 mit veränderter chemischer Zusammensetzung anschließen. Auf diese Weise können an verschiedenen axialen Bereichen des Schneckengrundkörpers 2 der Plastifizier-, Misch- oder Förderschnecke unterschiedliche Beschichtungswerkstoffe aufgebracht werden. Die Aufbringung der unterschiedlichen Beschichtungswerkstoffe ist denkbar einfach und bietet maximale Flexibilität. Man schneidet einfach ein Band 1 glatt ab und fügt daran nahtlos ein anderes Band 1 an, so dass die Fuge kaum zu erkennen ist und der Eindruck entsteht, das Band 1 läuft einfach fort. Diese Vorgehensweise wird so oft wiederholt, wie weitere Beschichtungswerkstoffe gewünscht sind. Die Länge der axialen Bereiche mit einen bestimmten Beschichtungswerkstoff ist mit dieser Technologie beliebig frei wählbar. Beim Verbinden des Bandes mit dem Untergrund schmilzt das Band in diesem Bereich an und durch dieses kurze Aufschmelzen schließt sich auch die Fuge zwischen zwei Bandabschnitten.

Es ist auch möglich, ein Band 1 mit einer in sich über seine Länge variierenden chemischen Zusammensetzung aufzutragen. Bei Standardschnecken könnte ein Band 1 mit in der Weise vorgegebener variierender chemischen Zusammensetzung aufgetragen werden, die eine Beschichtung ergibt, die optimal an die verschiedenen auftretenden Verschleißarten in dem Plastifizier- oder Compoundiersystem für Kunststoffmaschinen angepaßt ist.

### Bezugszeichenliste

- 1: Band
- 2: Schneckengrundkörper
- 3: Induktionsspule
- 4: Grund
- 5: Steg
- 6: Verschleißschutzbeschichtung
- 7: Flanke vom
- 8: Flanke hinten
- 9: Drahtgeflecht
- 10: Stützzylinder
- 11: Obere Halbschale des Stützzylinders
- 12: Untere Halbschale des Stützzylinders
- 13: Antihaftfolie
- 14: Schüttung
- 15: Hohlkehle

## Patentansprüche

1. Verfahren zur Herstellung einer Plastifizier-, Misch- oder Förderschnecke mit verschleißgeschützten Schneckenstegen, insbesondere einer Schnecke für Kunststoff verarbeitende Maschinen unter Verwendung eines den Verschleißschutzwerkstoff enthaltenden Bandes,
**dadurch gekennzeichnet,**
**dass** das Band (1) in dem Bereich, in dem die Stege (5) ausgebildet werden sollen, auf die Oberfläche des Schneckengrundkörpers (2) aufgebracht und anschließend thermisch behandelt wird, so dass in dem besagten Bereich eine verschleißgeschützte Oberfläche entsteht, und dass nachfolgend die Stege (5) herausgearbeitet werden und dabei der dazwischenliegende Schneckengrund (4) gebildet wird.

2. Verfahren nach Anspruch 1,
**dadurch gekennzeichnet,**
**dass** der Schneckengrundkörper (2) in dem Bereich, in dem die Stege (5) ausgebildet werden sollen, mit einer spiralförmigen Nut versehen wird, in die das Band (1) eingelegt wird.

3. Verfahren nach Anspruch 1 oder 2,
**dadurch gekennzeichnet,**
**dass** der Schneckengrundkörper (2) derart bearbeitet wird, dass die Unterseite des Bandes (1) im fertigen Zustand der Schnecke oberhalb des Schneckengrundes (4) liegt und die Stege (5) im wesentlichen von dem Material des Schneckengrundkörpers (2) gebildet werden.

4. Verfahren nach Anspruch 1 oder 2,
**dadurch gekennzeichnet,**
**dass** der Schneckengrundkörper (2) nur soweit bearbeitet wird, dass die Unterseite des Bandes (1) im fertigen Zustand der Schnecke unterhalb des Schneckengrundes (4) liegt und die Stege (5) im wesentlichen nur von dem Band (1) gebildet wird.

5. Verfahren nach Anspruch 4,
**dadurch gekennzeichnet,**
**dass** das Band (1) derart mitbearbeitet wird, dass sich beim Übergang von den Flanken (7,8) des Bandes (1) zu dem Schneckengrund (4) eine Hohlkehle (15) ausbildet.

6. Verfahren nach einem der Ansprüche 1 bis 5,
**dadurch gekennzeichnet,**
**dass** das Band (1) auf dem Schneckengrundkörper (2) durch einen Stützstrumpf (9), insbesondere ein Drahtgeflecht, fixiert wird.

7. Verfahren nach einem der Ansprüche 1 bis 5,
**dadurch gekennzeichnet,**
**dass** das Band (1) auf dem Schneckengrundkörper (2) durch einen Stützylinder (10) fixiert wird, wobei der Stützzylinder (10) aus wenigstens zwei Halbschalen (11, 12) gebildet wird.

8. Verfahren nach Anspruch 7,
**dadurch gekennzeichnet,**
**dass** auf der Innenseite des Stützzylinders (10) eine Antihaftfolie (13) vorgesehen wird.

9. Verfahren nach einem der Ansprüche 1 bis 8,
**dadurch gekennzeichnet,**
**dass** die thermische Behandlung in einem Vakuumofen stattfindet.

10. Verfahren nach einem der Ansprüche 1 bis 9,
**dadurch gekennzeichnet,**
**dass** die thermische Behandlung mittels einer Induktionsspule (3), vorzugsweise unter Schutzgasumspülung, oder mittels einer Flamme erfolgt.

11. Verfahren zur Regenerierung oder zur Reparatur von verschlissenen Bereichen von Stegen (5) einer Plastifizier-, Misch- oder Förderschnecke unter Verwendung eines einen Beschichtungswerkstoff enthaltendes Band (1),
**dadurch gekennzeichnet,**
**dass** auf die zu regenerierenden oder zu reparierenden Bereiche nach einer mechanischen Vorbehandlung das Band (1) aufgebracht wird und das Band (1) anschließend thermisch behandelt wird, so dass in dem besagten Bereich eine neue verschleißgeschützte Oberfläche entsteht und dass nachfolgend die Stege (5) nachgearbeitet werden.

## Claims

1. Method for producing a plastifying, mixing or conveying screw with wear-protected screw flights, in particular a screw for plastic-processing machines using a strip containing the wear-protective material, **characterised in that** the strip (1) is applied to the surface of the screw base body (2) in the area where the flights (5) are to be formed, and is then thermally treated so that a wear-protected surface is formed in said area and thereafter the flights (5) are worked out and the interposed flight base (4) is formed.

2. The method according to claim 1, **characterised in that** in the area where the flights (5) are to be formed, the screw base body (2) is provided with a spiral groove in which the strip (1) is inserted.

3. The method according to claim 1 or claim 2, **characterised in that** the screw base body (2) is machined so that the underside of the strip (1) in the finished state of the screw lies above the screw base (4) and the flights (5) are substantially formed from the material of the screw base body (2).

4. The method according to claim 1 or claim 2, **characterised in that** the screw base body (2) is only machined so far that the underside of the strip (1) in the finished state of the screw lies below the screw base (4) and the flights (5) are substantially only formed from the strip (1).

5. The method according to claim 4, **characterised in that** the strip (1) is co-machined such that a fillet (15) is formed at the transition of the flanks (7, 8) of the strip (1) to the screw base (4).

6. The method according to any one of claims 1 to 5, **characterised in that** the strip (1) is fixed on the screw base body (2) by a support sleeve (10), in particular a wire mesh.

7. The method according to any one of claims 1 to 5, **characterised in that** the strip (1) is fixed on the screw base body (2) by a support cylinder (10), wherein the support cylinder (10) is formed from at least two half-shells (11, 12).

8. The method according to claim 7, **characterised in that** the inside of the support cylinder (10) is provided with an anti-stick film (13).

9. The method according to any one of claims 1 to 8, **characterised in that** the thermal treatment takes place in a vacuum furnace.

10. The method according to any one of claims 1 to 9, **characterised in that** the thermal treatment is effected by means of an induction coil (3), preferably under protective-gas flushing, or by means of a flame.

11. A method for regenerating or repairing worn areas of flights (5) of a plastifying, mixing or conveying screw using a strip (1) containing a coating material (1), **characterised in that** the strip (1) is applied to the areas to be regenerated or repaired after a mechanical pre-treatment and the strip (1) is then thermally treated so that a new wear-protected surface is formed in said area and the flights (5) are then remachined.

## Revendications

1. Procédé de fabrication d'une vis de plastification, de mélange ou de convoyage comportant des traverses de vis protégées contre l'usure, notamment d'une vis pour machines traitant de la matière plastique, en utilisant une bande contenant le matériau anti-usure,
**caractérisé en ce que**
la bande (1), dans la zone où les traverses (5) doivent être réalisées, est appliquée sur la surface du corps de base de la vis (2) et ensuite traitée thermiquement, de sorte que, dans ladite zone, il se forme une surface protégée contre l'usure et qu'ensuite les traverses sont usinées dedans et la base de vis interposée (4) est formée.

2. Procédé selon la revendication 1,
**caractérisé en ce que**
le corps de base de vis (2), dans la zone où les traverses (5) doivent être réalisées, est pourvu d'une rainure en forme de spirale dans laquelle la bande (1) est insérée.

3. Procédé selon la revendication 1 ou 2,
**caractérisé en ce que**
le corps de base de vis (2) est usiné de manière à ce que la face inférieure de la bande (1), en état fini de la vis, se situe au dessus de la base de la vis (4) et que les traverses (5) sont formées sensiblement par la matière du corps de base de vis (2).

4. Procédé selon la revendication 1 ou 2,
**caractérisé en ce que**
le corps de base de vis (2) est usinée seulement jusqu'à ce que la face inférieure de la bande (1), en état fini de la vis, se situe au dessus de la base de la vis (4) et que les traverses (5) ne sont formées sensiblement que par la bande (1).

5. Procédé selon la revendication 4,
**caractérisé en ce que**
la bande (1) est usinée en même temps de manière à ce qu'à la transition entre les flancs (7, 8) de la bande (1) et la base de la vis (4), il se forme une gorge creuse (15).

6. Procédé selon une des revendications 1 à 5,
**caractérisé en ce que**
la bande (1) est fixée sur le corps de base de vis (2) par un tronc d'appui (9), notamment une tresse en fil.

7. Procédé selon une des revendications 1 à 5,
**caractérisé en ce que**
la bande (1) est fixée sur le corps de base de vis (2) par un cylindre d'appui (10), le cylindre d'appui (10) étant composé d'au moins deux demi-coques (11, 12).

8. Procédé selon la revendication 7,
**caractérisé en ce que**,
sur la face interne du cylindre d'appui (10), il est prévu un film anti-adhésif (13).

9. Procédé selon une des revendications 1 à 8,
**caractérisé en ce que**
le traitement thermique a lieu dans un four à vide.

10. Procédé selon une des revendications 1 à 9,
**caractérisé en ce que**
le traitement thermique est réalisé au moyen d'une bobine à induction (3), de préférence sous projection de gaz protecteur ou au moyen d'une flamme.

11. Procédé de régénération ou de réparation de zones usées de traverses (5) d'une vis de plastification, de mélange ou de convoyage en utilisant une bande contenant du matériau anti-usure,
**caractérisé en ce que**
la bande (1) est appliquée sur les zones à régénérer ou à réparer après un traitement mécanique préalable et que la bande (1) est ensuite traitée thermiquement, de sorte qu'il se forme dans ladite zone une nouvelle zone protégée contre l'usure et que les traverses (5) sont ensuite ré-usinées.
